# EUROPEAN PATENT SPECIFICATION

(11) **EP 2 654 354 B1**
(45) Date of publication and mention of the grant of the patent: **13.05.2020**
(21) Application number: 12164618.6
(22) Date of filing: 18.04.2012
(51) Int. Cl.: H04W 64/00, H04W 52/02, G01S 19/34

(54) **Providing a current position while reducing an overall power consumption**
Bereitstellung einer aktuellen Position bei gleichzeitiger Verringerung des Gesamtstromverbrauchs
Fourniture d'une position actuelle tout en réduisant la consommation globale d'énergie

(43) Date of publication of application: 23.10.2013
(73) Proprietor: Doro AB, 211 20 Malmö (SE)
(72) Inventor: Cullin, Peter, 245 44 Staffanstorp (SE); Palmqvist, Fredrik, SE-216 44 Limhamn (SE)
(74) Representative: Ström & Gulliksson AB

(56) References cited:
- EP-A1- 2 237 625
- WO-A1-2009/090297
- WO-A2-2009/049924
- WO-A2-2009/140168
- GB-A- 2 451 616

## Description

### TECHNICAL FIELD

This application relates to a method, a mobile communications terminal and a computer-readable program carrying instructions for reducing an overall power consumption, and in particular to a method, a mobile communications terminal and a computer-readable program carrying instructions for providing a current position while reducing an overall power consumption.

### BACKGROUND

Contemporary mobile communications terminals are often equipped with a Global Position Service (GPS) receiver. GPS receivers have relatively large power consumptions. Mobile communications terminals are also equipped with other devices and components, each contributing to the overall power consumption of the mobile communications terminal. The number of devices and components in a contemporary mobile communications terminal constitute a high power requirement for the mobile communications terminal. As the weight of a mobile communications terminal is an important sales factor it becomes a matter of importance to provide a mobile communications terminal having a low weight while still enabling a long operating time. A clever manner of regulating the power consumption is thus of importance for reducing the overall power consumption of a mobile communications terminal.

One manner of reducing the power consumption of a GPS unit is disclosed in the US patent US 8,121,614 which discloses a method of using radio signals transmitted for reception by mobile user equipment that includes receiving, with mobile user equipment (UE), radio signals having at least one format; monitoring, with the mobile user equipment, at least one property of the received radio signals; identifying a pattern in said monitored property or properties; and in response to identifying said pattern, triggering at least one action according to the identified pattern, and/or providing the UE with an indication of a location of the UE based at least part of the identified pattern.

The position determination taught by the patent US 8,121,614 determines that if a GPS signal can not be received the location of the UE is determined through for example identifying an operating network cell instead of through the GPS. The GPS is switched off to conserve power. However, the manner taught by US 8,121,614 only switches off the GPS when it can not receive signals. The GPS is thus allowed to draw power even when it is not needed or actively used.

The published international application WO2009090297 A1 discloses a movement information about a wireless client is correlated with information about the availability of wireless access points. A result of the correlation is used to estimate whether the wireless client is going to enter a region that is associated with a predetermined characteristic.

The published international application WO2009049924 A2 discloses a method for determining location of a mobile terminal includes repetitively switching power-on and power-off to a GPS receiver circuit which determines location of the mobile terminal using GPS signals. The power-on to power-off duty cycle of the GPS receiver circuit is regulated in response to distance that the mobile terminal has moved from a previously determined location. The power-on to power- off duty cycle can be regulated in response to identifying GPS isolation, in response to an acceleration-determined distance from previous GPS-determine location, an acceleration-determined velocity of the mobile terminal, availability of position assistance information from a cellular system, presence/absence of signals from a WLAN /Bluetooth device, and/or detection of a new cellular base station ID.

Further solutions related to power saving in mobile terminals are described in GB 2 451 616 A and in EP 2 237 625 A1.

There is thus a need for an alternative and improved manner of reducing a mobile communications terminal's overall power consumption while still being able to determine a mobile communications terminal's position.

### SUMMARY

The present invention is defined by the appended set of claims.

It is an object of the teachings of this application to overcome the problems listed above by providing a mobile communications terminal comprising a radio frequency interface and a controller and being arranged to operate with a position determining device, wherein said controller is configured to detect a beacon, establish a connection with said beacon through said radio frequency interface, deactivate said position determining device, and retrieve a position to be used as a current position for the mobile communications terminal thereby reducing a power consumption of the mobile communications terminal, wherein the controller is further configured to deactivate said radio frequency interface and intermittently activate and deactivate said radio frequency interface to determine whether the beacon is still within range.

In one embodiment the mobile communications terminal is further configured to determine that the connection with said beacon is terminated and in response thereto activate said position determining device.

This allows the mobile communications terminal to provide a position that is at least a good approximation of the mobile communications terminal's current position while reducing the power consumption of the mobile communications terminal.

It is a further object of the teachings of this application to overcome the problems listed above by providing a method for use in mobile communications terminal comprising a radio frequency interface and a controller and being arranged to operate with a position determining device, said method comprising detecting a beacon, establishing a connection with said beacon through said radio frequency interface, deactivating said position determining device, and retrieving a position to be used as a current position for the mobile communications terminal thereby reducing a power consumption of the mobile communications terminal, further comprising, deactivating said radio frequency interface and intermittently activating and deactivating said radio frequency interface to determine whether the beacon is still within range.

In one embodiment the method further comprises determining that the connection with said beacon is terminated and in response thereto activating said position determining device.

The methods above share the same advantages as the mobile communications terminals.

It is a further object of the teachings of this application to overcome the problems listed above by providing a computer readable medium comprising instructions that when loaded into and executed by a controller causes the execution of a method according to herein.

The inventors of the present application have realized, after inventive and insightful reasoning, that by substituting the position for the mobile communications terminal with the position for the beacon (or possibly the last used position of the mobile communications terminal if the beacon is stationary) the mobile communications terminal will have a good approximation of its own position without having to run the GPS receiver or other position determining device actively. The mobile communications terminal will thus know its current position power while reducing its overall power consumption.

Other features and advantages of the disclosed embodiments will appear from the attached detailed disclosure.

### BRIEF DESCRIPTION OF DRAWINGS

The invention will be described in further detail under reference to the accompanying drawings in which:
Figure 1 shows a schematic view of a mobile communications terminal according to one embodiment of the teachings of this application;
Figure 2 shows a schematic view of the general structure of a mobile communications terminal according to one embodiment of the teachings of this application;
Figure 3 shows a schematic view of a telecommunications network comprising a mobile communications terminal according to one embodiment of the teachings of this application;
Figure 4 shows a schematic view of a computer-readable medium according to one embodiment of the teachings of this application;
Figure 5 shows a schematic view of a system according to one embodiment of the teachings of this application;
Figure 6 shows a flow chart for a method for a mobile communications terminal according to an embodiment of the teachings of this application; and
Figure 7 shows a time-dependency graph according to an embodiment of the teachings of this application.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

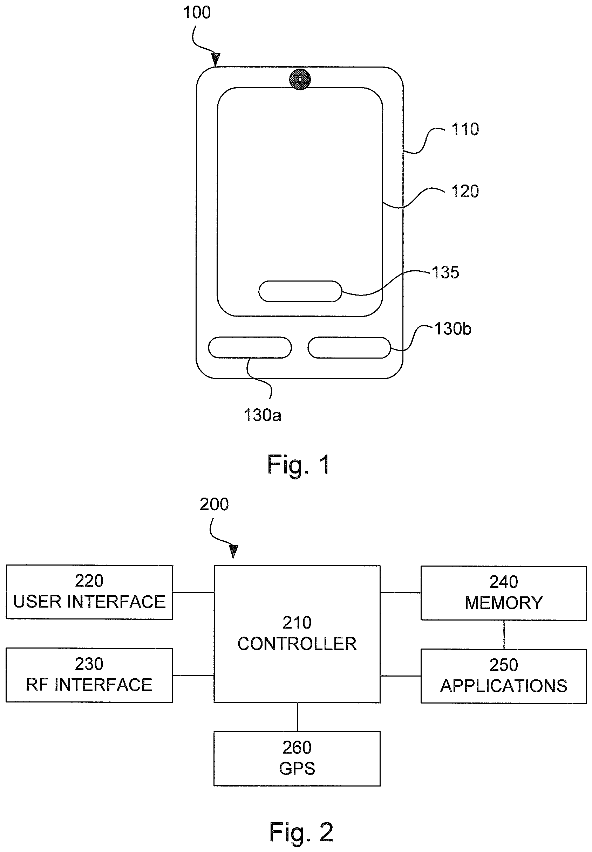

Figure 1 shows a schematic overview of a mobile communications terminal 100 adapted according to the teachings herein. In the embodiment shown the mobile communications terminal is a mobile phone 100. In other embodiments the mobile communications terminal 100 is a personal digital assistant, a media player, a location finding device or any hand-held device capable of communicating with other devices.

The mobile phone 100 comprises a housing 110 in which a display 120 is arranged. In one embodiment the display 120 is a touch display. In other embodiments the display 120 is a non-touch display. Furthermore, the mobile phone 100 comprises two keys 130a, 130b. In this embodiment there are two keys 130a-b, but any number of keys, including none, is possible and depends on the design of the mobile phone 100. In one embodiment the mobile phone 100 is configured to display and operate a virtual key 135 on the touch display 120. It should be noted that the number of virtual keys 135 are dependent on the design of the mobile phone 100 and an application that is executed on the mobile phone 100. In one embodiment the communications terminal 100 comprises an ITU-T keypad or a QWERTY (or equivalent) keypad in addition to or as an alternative to a touch-sensitive display. In an embodiment where the keypad is an alternative to a touch-sensitive display, the display 120 is a non-touch-sensitive display.

Figure 2 shows a schematic view of the general structure of a mobile communications terminal 200, which may be identical to the met 100 in figure 1. The mobile communications terminal 200 comprises a controller 210 which is responsible for the overall operation of the mobile terminal and is preferably implemented by any commercially available CPU ("Central Processing Unit"), DSP ("digital signal processor") or any other electronic programmable logic device, or a combination of such processors or other electronic programmable logic device. The controller 210 may be implemented using instructions that enable hardware functionality, for example, by using executable computer program instructions in a general-purpose or special-purpose processor that may be stored on a computer readable storage medium (disk, memory etc) 240 to be executed by such a processor. The controller 210 is configured to read instructions from the memory 240 and execute these instructions to control the operation of the mobile communications terminal 100. The memory 240 may be implemented using any commonly known technology for computer-readable memories such as ROM, RAM, SRAM, DRAM, CMOS, FLASH, DDR, EEPROM memory, flash memory, hard drive, optical storage or any combination thereof. The memory 240 is used for various purposes by the controller 210, one of them being for storing application data and various software modules in the mobile terminal. The software modules include a real-time operating system, drivers for a man-machine interface 220, an application handler as well as various applications 250. The applications 250 are sets of instructions that when executed by the controller 210 control the operation of the mobile communications terminal 100. The applications 250 can include a messaging application for short messaging service (SMS), multimedia messaging service (MMS) and electronic mail, a media player application, as well as various other applications 250, such as applications for voice calling, video calling, web browsing, document reading and/or document editing, an instant messaging application, a phonebook application, a calendar application, a control panel application, one or more video games, a notepad application, location finding applications, etc. In one embodiment the mobile communications terminal 200 further comprises a position determining device 260, such as a Global Positioning Systems (GPS) receiver 260 or a device to be used in another Global Navigation Satellite System (GNSS) such as GLONASS, Beidou navigation system, Compass navigation system or the European Union's Galileo positioning system. The mobile communications terminal 200 is thus able to determine its present location through the GPS receiver 260.

The mobile communications terminal 200 further comprises a user interface 220, which in the mobile communications terminal 100 of figure 1 is comprised of the display 120, the keys 130a-b, 135, a microphone and a loudspeaker. The user interface (UI) 220 also includes one or more hardware controllers, which together with user interface drivers cooperate with the display 120, keypad 130a-b, as well as various other I/O devices such as microphone, loudspeaker, vibrator, ringtone generator, LED indicator, etc. As is commonly known, the user may operate the mobile terminal through the man-machine interface thus formed.

The mobile communications terminal 200 further comprises a radio frequency interface 230, which is adapted to allow the mobile communications terminal to communicate with other communications terminals in a radio frequency band through the use of different radio frequency technologies. Examples of such technologies are W-CDMA, GSM, UMTS, LTE and NMT to name a few. The controller 210 is configured to operably execute the applications 250, such as the voice call and message handling applications, through the radio frequency interface 230 and software stored in the memory 240 which software includes various modules, protocol stacks, drivers, etc. to provide communication services (such as transport, network and connectivity) for the radio frequency interface 230, and optionally a Bluetooth interface for local connectivity. The radio frequency interface 230 comprises an internal or external antenna as well as appropriate radio circuitry for establishing and maintaining a wireless link to a base station. As is well known to a person skilled in the art, the radio circuitry comprises a series of analogue and digital electronic components, together forming a radio receiver and transmitter. These components include, e.g., band pass filters, amplifiers, mixers, local oscillators, low pass filters, AD/DA converters, etc. The radio frequency interface 230 further comprises components enabling short range radio frequency communication, such as Bluetooth™, Near Field Communication or wireless communication under the IEEE 802.11b standard (WiFi).

The mobile communications terminal 200 further comprises the aforementioned GPS receiver or component 260. The GPS receiver 260 is arranged to establish connections with a number of satellites and determine a current position of the GPS receiver 260 from the position of the satellites and to provide the controller 210 of the mobile communications terminal 200 with the position determined.

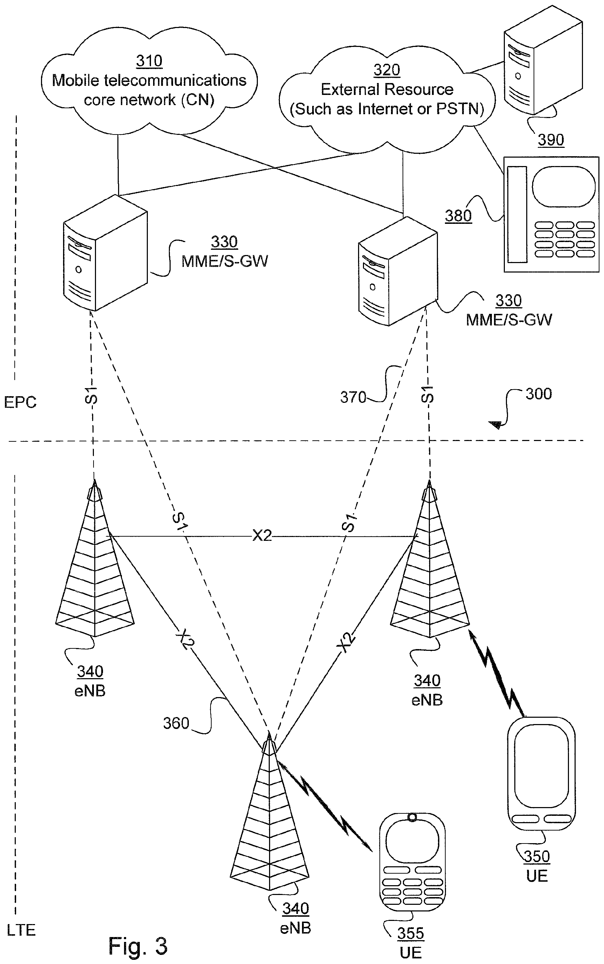

Figure 3 shows a schematic view of the general structure of a telecommunications system 300 according to the teachings herein. In the telecommunication system of figure 3, various telecommunications services such as cellular voice calls, www/wap browsing, cellular video calls, data calls, facsimile transmissions, music transmissions, still image transmissions, video transmissions, electronic message transmissions and electronic commerce may be performed between a mobile terminal 100, 200, 300 according to the disclosed embodiments and other communications terminals, such as another mobile terminal 355 or a stationary telephone 380. The mobile terminals 350, 355 are connected to a mobile telecommunications network 310 through Radio Frequency links via base stations 340.

The telecommunications system 300 comprises at least one server 330. A server 330 has a data storage and a controller that may be implemented by any commercially available CPU ("Central Processing Unit"), DSP ("Digital Signal Processor") or any other electronic programmable logic device. In one embodiment such a server is a Mobility Management Entity (MME). In one embodiment such a server is a Gateway (GW). The servers 330 are configured to communicate with a mobile telecommunications core network (CN) 310 and/or an external resource 320 such as the internet or a Public Switched Telephone Network (PSTN). A PSTN 320 is configured to communicate with and establish communication between stationary or portable telephones 380. In one embodiment the external resource comprises or is configured to communicate with an external service provider 390. In one embodiment the servers 330 are configured to communicate with other communications terminals using a packet switched technology or protocol. In such an embodiment the servers 330 may make up an Evolved Packet Core (EPC) layer.

The servers 330 are configured to communicate with nodes, also referred to as base stations 340. In one embodiment the base station 340 is an evolved Node Base (eNB). A base station 340 is further configured to communicate with a server 330. In one embodiment the communication between a server 330 and a base station 340 is effected through a standard or protocol 370. In one embodiment the protocol is S1. A base station 340 is configured to communicate with another base station 340. In one embodiment the communication between a base station 340 and another base station 340 is effected through a standard or protocol 360. In one embodiment the protocol 360 is X2. A base station 340 is further configured to handle or service a cell. In one embodiment the at least one base stations 340 make up a Long Term Evolution (LTE) layer. In one embodiment the at least one base stations 340 make up an LTE Advanced layer.

In one embodiment the base station 340 is configured to communicate with a mobile communications terminal 350 (100) through a wireless radio frequency protocol.

In one embodiment the telecommunications system 300 is an Evolved Packet System (EPS) network. In one embodiment the telecommunications system is a system based on the 3GPP (3rd Generation Partnership Project) standard. In one embodiment the telecommunications system is a system based on the UMTS (Universal Mobile Telecommunications System) standard. In one embodiment the telecommunications system is a system based on a telecommunications standard such as GSM, D-AMPS, CDMA2000, FOMA or TD-SCDMA.

References to 'computer-readable storage medium', 'computer program product', 'tangibly embodied computer program' etc. or a 'controller', 'computer', 'processor' etc. should be understood to encompass not only computers having different architectures such as single /multi- processor architectures and sequential (Von Neumann)/parallel architectures but also specialized circuits such as field-programmable gate arrays (FPGA), application specific circuits (ASIC), signal processing devices and other devices. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

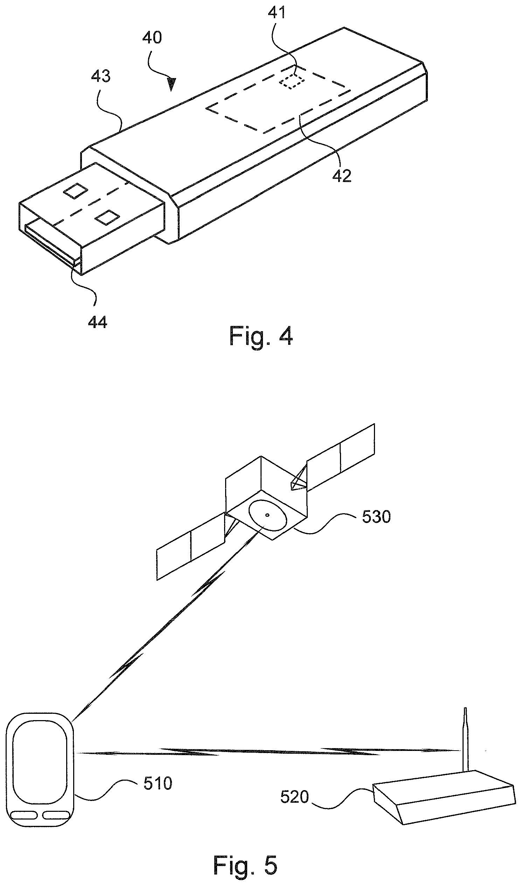

Figure 4 shows a schematic view of a computer-readable medium as described in the above. The computer-readable medium 40 is in this embodiment a memory stick, such as a Universal Serial Bus (USB) stick. The USB stick 40 comprises a housing 43 having an interface, such as a connector 44, and a memory chip 42. The memory chip 42 is a flash memory, that is, a non-volatile data storage that can be electrically erased and re-programmed. The memory chip 42 is programmed with instructions 41 that when loaded (possibly via the connector 44) into a controller, such as a processor, executes a method or procedure according to the embodiments disclosed above. The USB stick 40 is arranged to be connected to and read by a reading device, such as a terminal according to figure 1, for loading the instructions into the controller. It should be noted that a computer-readable medium can also be other mediums such as compact discs, digital video discs, hard drives or other memory technologies commonly used. The instructions can also be downloaded from the computer-readable medium via a wireless interface to be loaded into the controller.

Figure 5 shows a schematic view of a system according to an embodiment of the teachings herein. A mobile communications terminal 510, such as the mobile phone 100 or 200 of figure 1 or 2, has established connection with at least one satellite 530 through a GNSS device, in this embodiment a GPS receiver. The GPS receiver is not shown in figure 5, but is referenced 260 in figure 2. The GPS receiver 260 may be internal to the mobile communications terminal 510 or externally connected to the mobile communications terminal 510. As is known to a skilled person the number of satellites 530 that the GPS receiver 260 is connected to is dependent on the model and/or the settings of the mobile communications terminal 510. Even though a minimum of three satellites 530 is required for accurate determination of a position only one is shown in figure 5 for illustrative purposes.

The mobile communications terminal 510 is further connected to a beacon 520. The connection between the beacon 520 and the mobile communications terminal 510 is, in one embodiment, established through a radio frequency (RF) interface, such as the radio frequency interface referenced 230 in figure 2. In one such embodiment the connection is established over a Bluetooth connection. In one such embodiment, the beacon 530 is a Bluetooth™ beacon. In another such embodiment the connection is established over a Near-Field Communication (NFC) connection. In yet another such embodiment the connection is established over a wireless radio frequency connection through the use of a protocol such as the IEEE 802.11 protocol. In one such embodiment the beacon 530 is a WiFi hub.

The connection between the beacon 520 and the mobile communications terminal 510 is, in one embodiment, established through a wired connection. Such a wired connection is, in one embodiment, established over a data communication channel such as a USB (Universal Serial Bus) connection. In one alternative such embodiment the wired connection is established over a power charging connection, possibly via a USB (Universal Serial Bus) connection. In one such charging embodiment the beacon 530 is a charging or docking station.

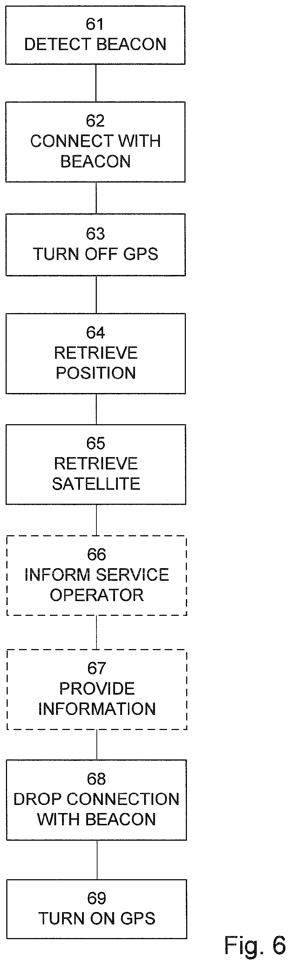

Figure 6 shows a flow chart for a general method for interaction between a mobile communications terminal 510 of figure 5 and a beacon 520 of figure 5 according to an embodiment of the teachings herein. In one embodiment a mobile communications terminal (not shown in figure 6, but referenced 200 in figure 2 and 510 in figure 5) detects 61 that a beacon is in range and that it is possible to establish a connection to the beacon.

In one embodiment a controller (not shown in figure 6, but referenced 210 in figure 2) of the mobile communications terminal 510 is configured to search actively for beacons on a radio frequency band that is associated with a beacon. This allows for a fast determination of available beacons in the proximity to the mobile communications terminal 510.

In one embodiment a controller (not shown in figure 6, but referenced 210 in figure 2) of the mobile communications terminal 510 is configured to search passively for beacons on a radio frequency band that is associated with a beacon. In one embodiment the passive search is implemented and achieved by the mobile communications terminal 510 being visible on for example a Bluetooth™ channel so that beacons (not shown in figure 6, but referenced 520 in figure 5) can search for any Bluetooth™ device, such as a mobile communications terminal 510, that comes into range and in response thereto make itself visible to the mobile communications terminal 510 (possibly by initiating a pairing procedure). This allows for a reduced power consumption as the mobile communications terminal 510 is not constantly or often broadcasting over the radio frequency interface (230).

In one embodiment the controller is configured to determine that a determined (current) position acquired through the GPS receiver 260 corresponds to (or is close to) a (known) beacon 520. If it is determined that a beacon 520 is in the proximity, the controller 210 is configured to turn on a corresponding radio frequency interface technology and begin to actively search for the beacon as indicated by the position.

In one embodiment the mobile communications terminal 510 detects a beacon 520 as the beacon 520 is connected to the mobile communications terminal 510 through a wired interface, such as a USB connection.

As the mobile communications terminal 510 has detected the beacon 520, the mobile communications terminal 510 establishes a connection 62 with the beacon 520. In an embodiment where the beacon 520 is a Bluetooth™ beacon the connection is established via a pairing sequence, as is known to a skilled person, where the mobile communications terminal 510 and the beacon 520 authenticate each other by exchanging a pass code. In an embodiment where the beacon 520 is a WiFi hub the connection is established by the mobile communications terminal 510 requesting access to the beacon 520, possibly by providing a pass code or password.

As the connection has been established successfully the mobile communications terminal 510 deactivates 63 the GPS receiver 260, for example by turning it off. This allows for a reduced power consumption for the mobile communications terminal 510 as the power draining GPS receiver 260 is now deactivated. In an alternative embodiment the GPS receiver 260 is set in a passive, standby mode to reduce its power consumption. This allows for a faster startup of the GPS receiver 260.

The mobile communications terminal 510 then retrieves a position 64 to be used while the GPS receiver 260 is turned off.

In one embodiment the mobile communications terminal 510 is configured to retrieve the position from the beacon 520 whereby the position of the beacon is used as the current position of the mobile communications terminal 510.

In one embodiment, where the beacon 520 is a known beacon 520, the mobile communications terminal 510 is configured to retrieve the position of the beacon 520 from an internal memory (such as the memory 240 of figure 2) or from an external memory such as a database or service operator (not shown).

In one embodiment the mobile communications terminal 510 is configured to receive the position from a peripheral GPS receiver (not shown) connected to the beacon 520. This allows for the mobile communications terminal 510 to keep an updated position of the beacon 520 as its own position without having to power the GPS receiver 260. This is beneficial when the beacon 520 is not stationary such as when placed in a vehicle, such as a train or a bus, and its position varies.

In one embodiment the mobile communications terminal 510 is configured to use the last known GPS position (as previously provided by the GPS receiver 260) as its current position, thereby assuming that the beacon 520 is stationary and that it is therefore not necessary to keep updating the position through the GPS receiver 260.

In one embodiment the mobile communications terminal 510 is configured to determine if it is possible to receive a position from the beacon 520 (the position of the beacon 520 may be retrieved from the beacon 520 or from a list of known beacons that is stored in either an internal memory 240 or in an external database) or via the beacon 520 from a peripheral GPS receiver, and if so, determine if the potentially retrievable position should be used or to retrieve the position of the mobile communications terminal 510 as the position.

The determination of which position to be used is, in one embodiment, based on a priority where the different positions have different priorities. For example, the last used or determined position of the mobile communications terminal 510 has a first priority, the position of the beacon 520 has a second priority and a peripheral GPS position (if any) has a third priority. The controller 210 of the mobile communications terminal 510 is configured to determine which of the first, second and possibly the third priority is the highest and use the corresponding position as the position of the mobile communications terminal 510.

The determination of which position to be used is, in one embodiment, based on signal strength. For example, if the last used or determined position was determined under low quality circumstances (such as if the connection(s) to the satellite(s) 530 is/are compromised for some reason - for example if the mobile communications terminal 510 is taken indoors), the controller 210 of the mobile communications terminal 510 is configured to determine that the position of the beacon 520 is to be used. It can be assumed that a stationary beacon 520 has a more accurate position than a position acquired for the mobile communications terminal 510 under low quality circumstances.

In one embodiment the controller 210 is configured to assign a priority value for the position of the mobile communications terminal 510 based on the signal quality under which the position was determined and determine which position to use based on such priority as in the embodiment above. For example, if a mobile communications terminal 510 is configured to establish connection with 16 satellites, but connection is only possible with three satellites, whereof one satellite connection is intermittent, the controller 210 assigns a low priority to the last used or determined position, whereas when the mobile communications terminal 510 has a strong connection to all 16 satellites the controller 210 assigns a high priority to the last used or determined position.

This allows the mobile communications terminal 510 to have an approximate position without having to actively power the GPS receiver 260, thereby reducing the overall power consumption of the mobile communications terminal 510. For example, if the beacon 520 is a Bluetooth™ beacon having a range of 10 meters the position of the mobile communications terminal 510 (using the position of the beacon 520 as its own position) will only be off by a maximum of 10 meters while the mobile communications terminal 510 has a connection with the beacon 520. For most uses an accuracy of 10 meters for determining a position is adequate.

To enable a fast startup of the GPS receiver 260 the mobile communications terminal 510 also retrieves an indication 65 of at least one satellite 530 to be used when the GPS receiver 260 is turned on again or resumed from stand-by mode.

In one embodiment the mobile communications terminal 510 is configured to retrieve an indication of at least one satellite 530 from the beacon 520. In one embodiment, where the beacon 520 is a known beacon 520, the mobile communications terminal 510 is configured to retrieve the indication of at least one satellite 530 from an internal memory (such as the memory 240 of figure 2) or from an external memory such as a database or service operator (not shown). This allows for connecting to a set of satellites 530 that is known to provide good readings in the vicinity of the beacon 520.

In one embodiment the mobile communications terminal 510 is configured to receive the indication of at least one satellite 530 from a peripheral GPS receiver (not shown) connected to the beacon 520. This allows the mobile communications terminal 510 to attempt to connect to a set of satellites that is evidentially possible to connect to in the vicinity of the current position of the beacon 520 as the peripheral GPS receiver is connected to that set.

By retrieving indications of recommended satellites for the position of the beacon 520 (or a peripheral GPS) the startup of the GPS receiver 260 is made more efficient as the GPS receiver 260 will attempt to synchronize/connect with a set of satellites that are known to work in the specific area. This is especially useful if the beacon 520 is not stationary and the GPS receiver 260 may be turned on in a new area.

In one embodiment the mobile communications terminal 510 is configured to use the last used at least one satellite 530 as the satellites to attempt connection with upon start up.

In one embodiment the mobile communications terminal 510 is configured to determine if it is possible to retrieve the indication of at least one satellite 530 from the beacon 520 (the indication of at least one satellite 530 may be retrieved from the beacon 520 or from a list of known beacons that is stored in either an internal memory 240 or in an external database) or via the beacon 520 from a peripheral GPS receiver, and if so, determine if the potentially retrievable indication of at least one satellite 530 should be used or to use the at least one satellite 530 last used.

The determination of which at least one satellite 530 to be used is, in one embodiment, based on a priority where the different satellite sets have different priorities. For example, the last used satellite set of the mobile communications terminal 510 has a first priority, the satellite set of the beacon has a second priority and the satellite set of the peripheral GPS receiver (if any) has a third priority, and the controller 210 of the mobile communications terminal 510 is configured to determine which of the first, second and possibly the third priority is the highest and use the corresponding satellite set as the satellite set for the mobile communications terminal 510.

The determination of which satellite set to be used is, in one embodiment, based on signal strength. For example, if the last used satellite set was used under low quality circumstances (such as if the connection(s) to the satellite(s) is/are compromised for some reason - for example if the mobile communications terminal 510 is taken indoors) the controller 210 of the mobile communications terminal 510 is configured to determine that the satellite set of the beacon 520 is to be used.

In one embodiment the controller 210 is configured to assign a priority value for the position of the mobile communications terminal 510 based on the signal quality under which the satellite set was used and determine which satellite set to use based on such priority as in the embodiment above. For example, if a mobile communications terminal 510 is configured to establish connection with 16 satellites, but connection is only possible with three satellites, whereof one satellite connection is intermittent, the controller 210 assigns a low priority to the last used satellite set, whereas when the mobile communications terminal 510 has a strong connection to all 16 satellites the controller 210 assigns a high priority to the last used satellite set.

To determine which satellite set to use allows for a faster startup of the GPS receiver which both reduces the power consumption of the GPS receiver 260 and also provides a faster determination of the correct position of the mobile communications terminal 510, as the connection between the mobile communications terminal 510 and the beacon 520 is dropped, lost or otherwise terminated.

In one embodiment the mobile communications terminal 510 is configured to start up the GPS receiver 260 using a standard search for a satellite set as per specifications of the GPS receiver 260. This allows for a simple interface to be used between the GPS receiver 260 and the mobile communications terminal 510.

As the mobile communications terminal 510 is connected to the beacon 520 a service operator may be informed 66 that the connection is established (as is indicated by the dashed lines in figure 6 this is optional). In one embodiment the mobile communications terminal 510 is configured to inform the service operator that it is connected to the beacon 520. In one embodiment the beacon 520 is configured to inform the service operator that it is connected to the mobile communications terminal 510. This allows a service operator to be contacted and informed of the activities of a user of the mobile communications terminal 510. Examples of such activities are when a worker reaches a designated work area (such as when a security guard patrols an area), a care taker enters a specific area (this allows a care provider to keep track of the care takers) or when a child enters a specific school or day care center area (which allows for keeping track of the position and whereabouts of a child).

Should the service operator determine that the user should not be in the area it can initiate an alarm sequence.

Also, in one embodiment the mobile communications terminal 510 is configured to determine that the beacon 520, with which connection is established, is a beacon of special importance, and the service provider can be informed of this. This is useful if there is an outstanding alarm regarding the user and the user then enters a safe area, whereupon the alarm can be cancelled or if the user enters an area that is deemed to be dangerous, whereupon an alarm can be issued.

In such circumstances where an alarm is issued it is important to maintain an updated (approximation of the) position of the mobile communications terminal 510, and to do this without drawing too much power so as to ensure that the battery time will be as long as possible.

Also optionally, the mobile communications terminal 510 is configured to provide user-specific information to the beacon 520 upon establishing a connection. Such user-specific information can relate to a home address (possibly containing contact information) of the user to enable a beacon operator to ensure that the user is not lost and if so, alert the corresponding contact.

As the connection with the beacon is lost, dropped or otherwise terminated 68 (possibly by actively disconnecting), the mobile communications terminal 510 is configured to activate 69 the GPS receiver 260 again, for example by turning it on.

This allows for a mobile communications terminal 510 to seamlessly maintain a position, or at least a reasonable approximation of the position, without having to run the GPS receiver 260 actively, thereby reducing the power consumption of the mobile communications terminal 510. This ensures that the user of the mobile communications terminal 510 or a service operator being connected with the mobile communications terminal 510 is aware of the position of the mobile communications terminal 510 at all times without draining the battery, thereby extending the battery time of the mobile communications terminal 510 by reducing its overall power consumption.

In one embodiment the mobile communications terminal 510 is configured to intermittently determine if the beacon 520 is still in range and, in between such determinations, turn off or deactivate the radio frequency interface 230 to further save power. In one embodiment the mobile communications terminal 510 is configured to perform such intermittent determinations depending on the time of day or if the mobile communications terminal 510 has been connected to the beacon 520 for a long time. As it is less likely that a user moves the mobile communications terminal 510 during night time, the mobile communications terminal 510 need not maintain an active connection with the beacon 520. To save further on power, the connection can be dropped intermittently. Also, if the mobile communications terminal 510 has been connected to a beacon 520, for example indicating an office or a home, it can be assumed that the user will stay there for a while and the controller can therefore turn off or deactivate the radio frequency interface 230 and intermittently determine if the beacon 520 is still in range. This allows for the mobile communications terminal 510 to reduce its power consumption based on an assumption about the locality of the beacon 520. In another example embodiment the mobile communications terminal 510 is configured to determine if the user is expected to stay in range of the beacon 520 for a longer period of time and if so deactivate or turn off the radio frequency interface 230 until such time has lapsed. In one embodiment the mobile communications terminal 510 is configured to intermittently activate or turn on the radio frequency interface in the mean time to make sure that the mobile communications terminal 510 is still in range of the beacon 520. In one embodiment the controller 210 is configured to make the determination that a user will remain in the vicinity of the beacon 520 by comparing the current time with a schedule. The schedule may be stored internally in the memory 240 or externally at a service provider or other data base. This allows the mobile communications terminal 510 to reduce its overall power consumption as the radio frequency interface 230 will be operated during shorter time periods. The time between the intermittent tests may vary upon the time of day. For example, the time between to tests can be longer during night time.

A GPS receiver 260 typically requires a power supply of 100 - 200 mA to operate, while for example a Bluetooth™ interface requires a power supply of less than 30 mA to operate. It is clearly more power economic to operate the Bluetooth™ interface than the GPS receiver 260, and the power consumption of the position determining is thereby greatly reduced.

In one embodiment the mobile communications terminal 510 is configured to prompt the user of the mobile communications terminal 510 to confirm that the GPS receiver 260 should be turned on again before doing so.

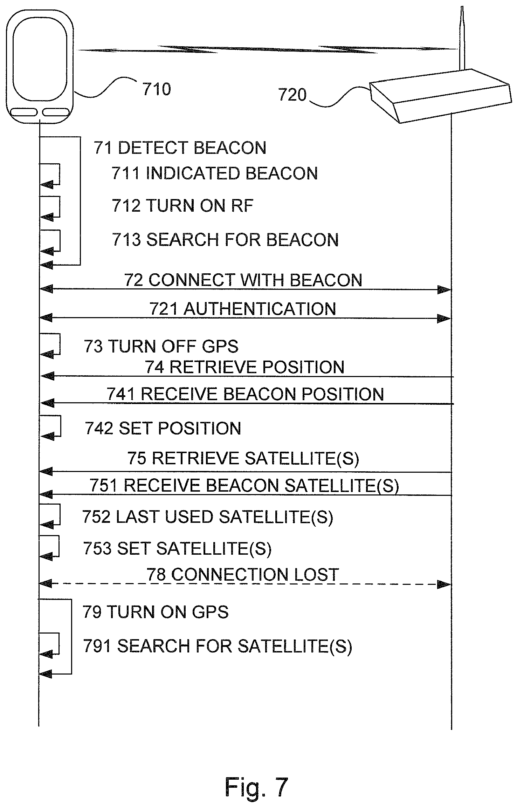

Figure 7 shows a time-dependency graph according to an example embodiment of the teachings herein. In figure 7 a mobile communications terminal 710 and a beacon 720 is in close proximity to each other. The mobile communications terminal 710 is arranged to implement the general method according to figure 6. The mobile communications terminal 710 detects 71 the beacon 720, by determining that there is an indication 711 of a (known) beacon 720 in close proximity to the current position, turning on 712 the appropriate radio frequency interface (not shown in figure 7, but referenced 230 in figure 2) for the beacon 720 and to (actively or passively) search 713 for the beacon 720. As the beacon 720 is found a connection between the mobile communications terminal 710 and the beacon 720 is established 72. During the establishment of the connection an authentication procedure 721 is performed between the mobile communications terminal 710 and the beacon 720. A GNSS device, such as a GPS receiver (not shown in figure 7, but referenced 260 in figure 2) of the mobile communications terminal 710 is turned off 73 to reduce the power consumption, and the mobile communications terminal 710 retrieves 74 a position to be used while the GPS receiver 260 is turned off or deactivated. In this example the mobile communications terminal 710 receives the position 741 from the beacon 720 and the mobile communications terminal 710 sets 742 the position received to be the position of the mobile communications terminal 710. Thereafter the mobile communications terminal 710 retrieves 75 an indication of at least one satellite 530 to attempt to synchronize with upon startup of the GPS receiver 260. In this example the indication of at least one satellite 530 is received 751 from the beacon 720. The controller of the mobile communications terminal 710 then determines if the satellites received from the beacon 720 or the last used satellites should be used 752, and, depending on this determination, sets the satellites to be used 753.

As the connection between the mobile communications terminal 710 and the beacon 720 is terminated 78 the mobile communications terminal 710 activates or turns on 79 the GPS receiver 260 which starts to search for the satellites 791 as previously set.

It should be noted that the mobile communications terminal 710 of figure 7 is only described to implement one embodiment of the general method described with reference to figure 6, but it should be noted that a mobile communications terminal 710 may be arranged to implement also other embodiments of the general method and also in other combinations than described with reference to figure 7 and that the mobile communications terminal 710 of figure 7 is only described for illustrative purposes indicating that an mobile communications terminal 710 can easily implement the method of figure 6.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A mobile communications terminal (200, 510, 710) comprising a radio frequency interface (230) and a controller (210) and being arranged to operate with a position determining device (260), wherein said controller (210) is configured to:
detect a beacon (720);
establish a connection with said beacon (720) through said radio frequency interface (230);
deactivate said position determining device (260); and
retrieve a position to be used as a current position for the mobile communications terminal (200, 510, 710); thereby reducing a power consumption of the mobile communications terminal (200, 510, 710); **characterized in that** the controller is further configured to
deactivate said radio frequency interface (230) and intermittently activate and deactivate said radio frequency interface (230) to determine whether the beacon (520, 720) is still within range.

2. The mobile communications terminal (200, 510, 710) according to claim 1, wherein the controller (210) is further configured to determine that the connection with said beacon (720) is terminated and in response thereto activate said position determining device (260).

3. The mobile communications terminal (200, 510, 710) according to claims 1 or 2, wherein the controller (210) is further configured to perform such intermittent determinations depending on the time of day.

4. The mobile communications terminal (200, 510, 710) according to claims 1 or 2, wherein the controller (210) is further configured to perform such intermittent determinations depending on a location of the beacon (520).

5. The mobile communications terminal (200, 510, 710) according to claims 1 or 2, wherein the controller (210) is further configured to determine if the mobile communications terminal (200, 510, 700) is expected to stay in range of the beacon (520) for a longer period of time and if so deactivate or turn off the radio frequency interface (230) until such time has lapsed, wherein said controller (210) is configured to make the determination that a user will remain in the vicinity of the beacon (520) by comparing the current time with a schedule.

6. The mobile communications terminal (200, 510, 710) according to any of claims 1 to 5 , wherein the controller (210) is further configured to:
retrieve said position from said beacon (520, 720) as a first position;
retrieve said position from said position determining device (260) as the last determined position as a second position; and
determine whether said first or second position should be used based on a priority of said first and second position.

7. The mobile communications terminal (200, 510, 710) according to claim 6, wherein said controller is further configured to assign a priority to a position determined by said position determining device (260) based on a signal quality.

8. The mobile communications terminal (200, 510, 710) according to any preceding claim, wherein said controller is further configured to retrieve an indication of at least one satellite (530) from said beacon (520, 720) to be used when activating said position determining device (260).

9. The mobile communications terminal (200, 510, 710) according to claim 8, wherein said controller is further configured to:
retrieve said indication of at least one satellite (530) from said beacon (520, 720) as a first satellite set;
retrieve said indication of at least one satellite (530) from said position determining device (260) as a second satellite set; and
determine whether said first or second satellite set should be used based on a signal quality of said second satellite set.

10. The mobile communications terminal (200, 510, 710) according to any preceding claim, wherein said controller is further configured to detect said beacon (520, 720) by determining that an indicated beacon (520, 720) is in close proximity to a current position determined by the position determining device (260), and, in response thereto, activate the radio frequency interface (230) and search for the indicated beacon (520, 720).

11. The mobile communications terminal (200, 510, 710) according to claim 5, wherein said position is received from a peripheral position determining device through said beacon (520, 720).

12. The mobile communications terminal (200, 510, 710) according to claims 8 or 9, wherein said indication of at least one satellite (530) is received from a peripheral position determining device through said beacon (520, 720).

13. The mobile communications terminal (200, 510, 710) according to any preceding claims, further comprising said positioning determining device (260).

14. The mobile communications terminal (200, 510, 710) according to any preceding claims, wherein said positioning determining device (260) is a Global Positioning Systems receiver.

15. The mobile communications terminal (200, 510, 710) according to any preceding claims, wherein said radio frequency interface (230) comprises one or more interfaces selected from Bluetooth™, Near Field Communication or a wireless interface according to the IEEE 802.11b standard.

16. A method for use in a mobile communications terminal (200, 510, 710) comprising a radio frequency interface (230) and a controller (210) and being arranged to operate with a position determining device (260), said method comprising:
detecting a beacon (720);
establishing a connection with said beacon (720) through said radio frequency interface (230);
deactivating said position determining device (260); and
retrieving a position to be used as a current position for the mobile communications terminal (200, 510, 710); thereby reducing a power consumption of the mobile communications terminal (200, 510, 710); said method being **characterized in** further comprising
deactivating said radio frequency interface (230) and intermittently activating and deactivating said radio frequency interface (230) to determine whether the beacon (520, 720) is still within range.

17. The method according to claim 16, further comprising determining that the connection with said beacon (720) is terminated and in response thereto activating said position determining device (260).

18. A computer readable storage medium (40) encoded with instructions (41) that, when loaded and executed on a processor, causes the processor to carry out the method according to claims 16 or 17.

## Patentansprüche

1. Mobiles Kommunikationsendgerät (200, 510, 710), umfassend eine Funkfrequenz-Schnittstelle (230) und eine Steuereinheit (210), die angeordnet ist, um mit einer Positionsbestimmungs-Vorrichtung (260) zu wirken, wobei die Steuereinheit (210) ausgelegt ist zum:
Erkennen eines Beacon (720);
Herstellen einer Verbindung mit dem Beacon (720) durch die Funkfrequenz-Schnittstelle (230);
Deaktivieren der Positionsbestimmungs-Vorrichtung (260); und,
Abrufen einer Position, die als eine aktuelle Position für das mobile Kommunikationsendgerät (200, 510, 710) zu verwenden ist;
wodurch ein Energieverbrauch des mobilen Kommunikationsendgeräts (200, 510, 710) verringert ist; **dadurch gekennzeichnet, dass** die Steuereinheit weiterhin ausgelegt ist zum
Deaktivieren der Funkfrequenz-Schnittstelle (230) und intermittierenden Aktivieren und Deaktivieren der Funkfrequenz-Schnittstelle (230) zum Bestimmen, ob das Beacon (520, 720) immer noch innerhalb des Bereichs ist.

2. Mobiles Kommunikationsendgerät (200, 510, 710) gemäß Anspruch 1, wobei die Steuereinheit (210) weiterhin ausgelegt ist, um zu bestimmen, dass die Verbindung mit dem Beacon (720) beendet ist und als Antwort darauf die Positionsbestimmungs-Vorrichtung (260) zu aktivieren.

3. Mobiles Kommunikationsendgerät (200, 510, 710) gemäß den Ansprüchen 1 oder 2, wobei die Steuereinheit (210) weiterhin zum Durchführen der intermittierenden Bestimmungen in Abhängigkeit von der Tageszeit ausgelegt ist.

4. Mobiles Kommunikationsendgerät (200, 510, 710) gemäß den Ansprüchen 1 oder 2, wobei die Steuereinheit (210) weiterhin zum Durchführen der intermittierenden Bestimmungen in Abhängigkeit von einem Standort des Beacon (520) ausgelegt ist.

5. Mobiles Kommunikationsendgerät (200, 510, 710) gemäß den Ansprüchen 1 oder 2, wobei die Steuereinheit (210) weiterhin ausgelegt ist, um zu bestimmen, ob das mobile Kommunikationsendgerät (200, 510, 700) voraussichtlich für einen längeren Zeitraum in dem Bereich des Beacon (520) bleibt und falls ja, die Funkfrequenz-Schnittstelle (230) zu deaktivieren oder abzuschalten, bis dieser Zeitraum abgelaufen ist, wobei die Steuereinheit (210) zum Bestimmen per Vergleichen der aktuellen Zeit mit einem Zeitplan ausgelegt ist, dass ein Nutzer in der Nähe des Beacon (520) bleiben wird.

6. Mobiles Kommunikationsendgerät (200, 510, 710) gemäß deinem der Ansprüche 1 bis 5, wobei die Steuereinheit (210) weiterhin ausgelegt ist zum:
Abrufen der Position von dem Beacon (520, 720) als eine erste Position;
Abrufen der Position von der die Positionsbestimmungs-Vorrichtung (260) als die letzte bestimmte Position als eine zweite Position; und
Bestimmen, ob die erste oder die zweite Position basierend auf einer Priorität der ersten und der zweiten Position zu verwenden ist.

7. Mobiles Kommunikationsendgerät (200, 510, 710) gemäß Anspruch 6, wobei die Steuereinheit weiterhin zum Zuordnen einer Priorität zu einer Position ausgelegt ist, die durch die die Positionsbestimmungs-Vorrichtung (260) basierend auf einer Signalqualität bestimmt ist.

8. Mobiles Kommunikationsendgerät (200, 510, 710) gemäß einem der vorhergehenden Ansprüche, wobei die Steuereinheit weiterhin zum Abrufen einer Angabe wenigstens eines Satelliten (530) von dem Beacon (520, 720) ausgelegt ist, die beim Aktivieren der Positionsbestimmungs-Vorrichtung (260) zu verwenden ist.

9. Mobiles Kommunikationsendgerät (200, 510, 710) gemäß Anspruch 8, wobei die Steuereinheit weiterhin ausgelegt ist zum:
Abrufen der Angabe wenigstens eines Satelliten (530) von dem Beacon (520, 720) als einen ersten Satellitensatz;
Abrufen der Angabe wenigstens eines Satelliten (530) von der Positionsbestimmungs-Vorrichtung (260) als einen zweiten Satellitensatz; und
Bestimmen, ob der erste oder der zweite Satellitensatz basierend auf einer Signalqualität des zweiten Satellitensatzes verwendet werden soll.

10. Mobiles Kommunikationsendgerät (200, 510, 710) gemäß einem der vorhergehenden Ansprüche, wobei die Steuereinheit weiterhin ausgelegt ist, das Beacon (520, 720) zu erkennen, indem sie bestimmt, dass ein angegebenes Beacon (520, 720) in unmittelbarer Nähe zu einer aktuellen Position ist, die durch die Positionsbestimmungs-Vorrichtung (260) bestimmt ist und als Antwort darauf die Funkfrequenz-Schnittstelle (230) zu aktivieren und nach dem angegebenen Beacon (520, 720) zu suchen.

11. Mobiles Kommunikationsendgerät (200, 510, 710) gemäß Anspruch 5, wobei die Position von einer eine periphere Position bestimmenden Vorrichtung durch das Beacon (520, 720) empfangen wird.

12. Mobiles Kommunikationsendgerät (200, 510, 710) gemäß Anspruch 8 oder 9, wobei die Angabe des wenigstens einen Satelliten (530) von einer eine umlaufende Position bestimmenden Vorrichtung durch das Beacon (520, 720) empfangen ist.

13. Mobiles Kommunikationsendgerät (200, 510, 710) gemäß einem der vorhergehenden Ansprüche, weiterhin umfassend die Positionsbestimmungs-Vorrichtung (260).

14. Mobiles Kommunikationsendgerät (200, 510, 710) gemäß einem der vorhergehenden Ansprüche, wobei die Positionsbestimmungs-Vorrichtung (260) ein "Global Positioning Systems"-Empfänger ist.

15. Mobiles Kommunikationsendgerät (200, 510, 710) gemäß einem der vorhergehenden Ansprüche, wobei die Funkfrequenz-Schnittstelle (230) eine oder mehrere Schnittstelle(n) umfasst, die aus Bluetooth™, Near Field Communication oder einer drahtlosen Schnittstelle gemäß der Norm IEEE 802.11b ausgewählt ist.

16. Verfahren zur Verwendung in einem mobilen Kommunikationsendgerät (200, 510, 710), umfassend eine Funkfrequenz-Schnittstelle (230) und eine Steuereinheit (210), die ausgelegt ist, mit einer Positionsbestimmungs-Vorrichtung (260) zu arbeiten, wobei das Verfahren umfasst:
Erkennen eines Beacon (720);
Herstellen einer Verbindung mit dem Beacon (720) durch die Funkfrequenz-Schnittstelle (230);
Deaktivieren der Positionsbestimmungs-Vorrichtung (260); und,
Abrufen einer Position, die als eine aktuelle Position für das mobile Kommunikationsendgerät (200, 510, 710) zu verwenden ist;
wodurch ein Energieverbrauch des mobilen Kommunikationsendgeräts (200, 510, 710) verringert ist; **dadurch gekennzeichnet, dass** das Verfahren weiterhin umfasst
Deaktivieren der Funkfrequenz-Schnittstelle (230) und intermittierendes Aktivieren und Deaktivieren der Funkfrequenz-Schnittstelle (230) zum Bestimmen, ob das Beacon (520, 720) immer noch innerhalb des Bereichs ist.

17. Verfahren gemäß Anspruch 16, weiterhin umfassend das Bestimmen, dass die Verbindung mit dem Beacon (720) beendet ist und als Antwort darauf das Aktivieren der Positionsbestimmungs-Vorrichtung (260).

18. Computerlesbares Speichermedium (40), das mit Anweisungen (41) kodiert ist, die, wenn sie auf einem Prozessor geladen und ausgeführt sind, den Prozessor veranlassen, das Verfahren gemäß Anspruch 16 oder 17 auszuführen.

## Revendications

1. Terminal de communication mobile (200, 510, 710) comprenant une interface radiofréquence (230) et un contrôleur (210), et étant agencé de manière à fonctionner avec un dispositif de détermination de position (260), dans lequel ledit contrôleur (210) est configuré de manière à :
détecter une balise (720) ;
établir une connexion avec ladite balise (720) par l'intermédiaire de ladite interface radiofréquence (230) ;
désactiver ledit dispositif de détermination de position (260) ; et
récupérer une position à utiliser comme position en cours pour le terminal de communication mobile (200, 510, 710),
ce qui permet de réduire par conséquent une consommation d'énergie du terminal de communication mobile (200, 510, 710) ; **caractérisé en ce que** le contrôleur est en outre configuré de manière à :
désactiver ladite interface radiofréquence (230) et activer et désactiver par intermittence ladite interface radiofréquence (230) en vue de déterminer si la balise (520, 720) est encore à portée.

2. Terminal de communication mobile (200, 510, 710) selon la revendication 1, dans lequel le contrôleur (210) est en outre configuré de manière à déterminer que la connexion avec ladite balise (720) est terminée et, en réponse à cela, à activer ledit dispositif de détermination de position (260).

3. Terminal de communication mobile (200, 510, 710) selon la revendication 1 ou 2, dans lequel le contrôleur (210) est en outre configuré de manière à mettre en œuvre de telles déterminations intermittentes en fonction de l'heure de la journée.

4. Terminal de communication mobile (200, 510, 710) selon la revendication 1 ou 2, dans lequel le contrôleur (210) est en outre configuré de manière à mettre en œuvre de telles déterminations intermittentes en fonction d'un emplacement de la balise (520).

5. Terminal de communication mobile (200, 510, 710) selon la revendication 1 ou 2, dans lequel le contrôleur (210) est en outre configuré de manière à déterminer si le terminal de communication mobile (200, 510, 700) est susceptible de rester à portée de la balise (520) pendant une période de temps plus longue et, si tel est le cas, à désactiver ou éteindre l'interface radiofréquence (230) jusqu'à ce que cette période de temps soit écoulée, dans lequel ledit contrôleur (210) est configuré de manière à déterminer qu'un utilisateur restera à proximité de la balise (520) en comparant l'heure en cours à une planification.

6. Terminal de communication mobile (200, 510, 710) selon l'une quelconque des revendications 1 à 5, dans lequel le contrôleur (210) est en outre configuré de manière à :
récupérer ladite position à partir de ladite balise (520, 720), en tant qu'une première position ;
récupérer ladite position à partir dudit dispositif de détermination de position (260), sous la forme de la dernière position déterminée, en tant qu'une seconde position ; et
déterminer si ladite première position ou ladite seconde position doit être utilisée sur la base d'une priorité de ladite première position et de ladite seconde position.

7. Terminal de communication mobile (200, 510, 710) selon la revendication 6, dans lequel ledit contrôleur est en outre configuré de manière à affecter une priorité à une position déterminée par ledit dispositif de détermination de position (260) sur la base d'une qualité de signal.

8. Terminal de communication mobile (200, 510, 710) selon l'une quelconque des revendications précédentes, dans lequel ledit contrôleur est en outre configuré de manière à récupérer une indication d'au moins un satellite (530), à partir de ladite balise (520, 720), à utiliser lors de l'activation dudit dispositif de détermination de position (260).

9. Terminal de communication mobile (200, 510, 710) selon la revendication 8, dans lequel ledit contrôleur est en outre configuré de manière à :
récupérer ladite indication d'au moins un satellite (530) à partir de ladite balise (520, 720), en tant qu'un premier ensemble de satellites ;
récupérer ladite indication d'au moins un satellite (530) à partir dudit dispositif de détermination de position (260), en tant qu'un second ensemble de satellites ; et
déterminer si ledit premier ensemble de satellites ou ledit second ensemble de satellites doit être utilisé sur la base de la qualité de signal dudit second ensemble de satellites.

10. Terminal de communication mobile (200, 510, 710) selon l'une quelconque des revendications précédentes, dans lequel ledit contrôleur est en outre configuré de manière à détecter ladite balise (520, 720) en déterminant qu'une balise indiquée (520, 720) est à proximité immédiate d'une position en cours déterminée par le dispositif de détermination de position (260), et, en réponse à cela, à activer l'interface radiofréquence (230) et à rechercher la balise indiquée (520, 720).

11. Terminal de communication mobile (200, 510, 710) selon la revendication 5, dans lequel ladite position est reçue en provenance d'un dispositif de détermination de position périphérique, par l'intermédiaire de ladite balise (520, 720).

12. Terminal de communication mobile (200, 510, 710) selon la revendication 8 ou 9, dans lequel ladite indication d'au moins un satellite (530) est reçue en provenance d'un dispositif de détermination de position périphérique, par l'intermédiaire de ladite balise (520, 720).

13. Terminal de communication mobile (200, 510, 710) selon l'une quelconque des revendications précédentes, comprenant en outre ledit dispositif de détermination de position (260).

14. Terminal de communication mobile (200, 510, 710) selon l'une quelconque des revendications précédentes, dans lequel ledit dispositif de détermination de position (260) est un récepteur de système de positionnement mondial.

15. Terminal de communication mobile (200, 510, 710) selon l'une quelconque des revendications précédentes, dans lequel ladite interface radiofréquence (230) comprend une ou plusieurs interfaces sélectionnées parmi une interface Bluetooth™, une interface de communication en champ proche ou une interface sans fil selon la norme IEEE 802.11b.

16. Procédé destiné à être utilisé dans un terminal de communication mobile (200, 510, 710) comprenant une interface radiofréquence (230) et un contrôleur (210) et étant agencé de manière à fonctionner avec un dispositif de détermination de position (260), ledit procédé comprenant les étapes ci-dessous consistant à :
détecter une balise (720) ;
établir une connexion avec ladite balise (720) par l'intermédiaire de ladite interface radiofréquence (230) ;
désactiver ledit dispositif de détermination de position (260) ; et
récupérer une position à utiliser comme position en cours pour le terminal de communication mobile (200, 510, 710),
ce qui permet de réduire par conséquent une consommation d'énergie du terminal de communication mobile (200, 510, 710) ; ledit procédé étant **caractérisé en ce qu'**il comprend en outre l'étape ci-dessous consistant à :
désactiver ladite interface radiofréquence (230) et activer et désactiver par intermittence ladite interface radiofréquence (230) en vue de déterminer si la balise (520, 720) est encore à portée.

17. Procédé selon la revendication 16, comprenant en outre l'étape consistant à déterminer que la connexion avec ladite balise (720) est terminée et, en réponse à cela, à activer ledit dispositif de détermination de position (260).

18. Support de stockage lisible par ordinateur (40) codé avec des instructions (41) qui, lorsqu'elles sont chargées et exécutées sur un processeur, amènent le processeur à mettre en œuvre le procédé selon la revendication 16 ou 17.
